# EUROPEAN PATENT APPLICATION

(11) **EP 2 063 568 A1**
(43) Date of publication of application: **27.05.2009**
(21) Application number: 07291400.5
(22) Date of filing: 26.11.2007
(51) Int. Cl.: H04L 12/18

(54) **Process for delivering a channel comprising a plurality of subchannels over a single multicast tree of a network**

(71) Applicant: Alcatel Lucent, 75008 Paris (FR)
(72) Inventor: Van den Berghe, Steven, 9620 Zottegem (BE); van Caenegem, Tom c/o Alcatel-Lucent Bell N.V., 2018 Antwerp (BE)
(74) Representative: Sayettat, Julien Christian

(57) **Abstract**

Process for delivering a channel comprising a plurality of subchannels to a media terminal through a network, said channel being sent over a single multicast tree of the network, said multicast tree comprising nodes, wherein :
- the media terminal sends an update message to a node in order to indicate subchannels it wishes to receive;
- the node selects indicated subchannels and sends only said subchannels to the media terminal.

## Description

The invention relates to process for delivering a channel comprising a plurality of subchannels to a media terminal through a network using notably IGMP protocol, said channel being sent over a single multicast tree of the network, said multicast tree comprising nodes.

Broadcast TV services propose for one single channel more and more subchannels, which are a technical solution to multiplex multiple videos, audio, subtitles, data, etc. As a matter of fact, subchannels are good economic solution for TV channels to deliver new programs, products and services. This is also true for every other multimedia-related means and the invention can be adapted to such means as layers for scalable video coding, viewpoints for multiviewpoint coding, interactive IPTV services, conferencing...

Multimedia channels and their subchannels are currently transported over multicast trees, one multicast tree corresponding to one channel or subchannel.

As the number of subchannels increases very quickly, the number of multicast trees increases the same way, raising the network space consumption and risks of confusion. There is no known mechanism to join on individual subchannels belonging to a single channel, without having to transport each individual subchannel over a separate multicast tree.

In the future, existing technologies will generate difficulties to manage the multicast address space. A mapping between subchannels and multicast addresses will either need to be a fixed configuration (e.g. base channel is address M, first SVC layer has address M+1, ...), or additional signaling will be needed to dynamically set this mapping.

It is also difficult to identify subchannels belonging together. For instance, monitoring of a single channel will require an intermediate point to join on all multicast trees. In the case of a dynamically signaled subchannel-address mapping, the signaling will first need to be interpreted to understand the mapping in an intermediate point.

The purpose of the invention is to resolve the problems of the prior art by proposing, in particular, a process for delivering subchannels of a channel through a network that reduces the consumption of the network space by using a single multicast address for all subchannels associated with a specific channel and selecting only indicated subchannels.

For that purpose and according to a first aspect, the invention relates to a process for delivering a channel comprising a plurality of subchannels to a media terminal through a network, said channel being sent over a single multicast tree of the network, said multicast tree comprising nodes, wherein :
- the media terminal sends an update message to a node in order to indicate subchannels it wishes to receive;
- the node selects indicated subchannels and sends only said subchannels to the media terminal.

According to a second aspect, the invention relates to a node of a multicast tree of a network delivering a channel comprising a plurality of subchannels over such tree, said node comprising means for filtering subchannels indicated in an update message.

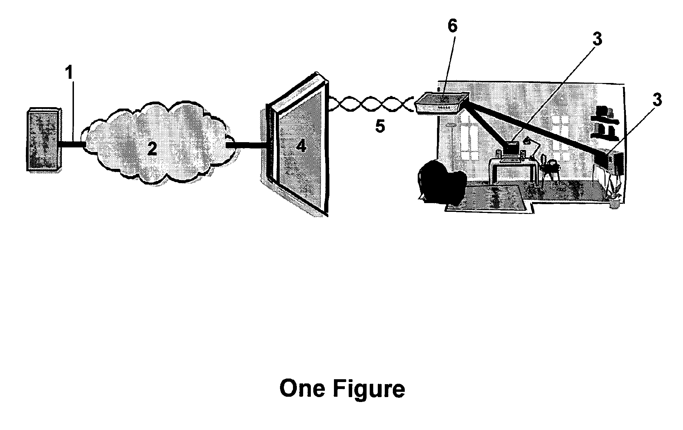

Other aspects and advantages will become apparent in the following description made with reference to the appended figure that illustrates the carrying out of the process according to an embodiment of the invention.

The present invention concerns a process for delivering a channel 1 to a media terminal 3 through a network 2 over a single multicast tree of said network, said multicast tree comprising nodes. In the illustrated embodiment two medial terminals 3 are connected to the network 2 by means of a box 6.

The channel 1 comprises a plurality of subchannels. For example, subchannels can correspond to complement of a main channel in matter of television or correspond to resolution layers in scalable video coding.

The network 2 uses the IGMP protocol, this protocol being the best adapted in matter of multicast group address. The IGMP protocol allows notably identifying the channels thanks to their multicast addresses.

An access node 4 of the multicast tree receives all subchannels of the channel 1 and the media terminal 3 sends an update message 5 to the node 4 in order to indicate subchannels it wishes to receive amongst all subchannels of the channel 1.

Upon receipt of the update message 5 by the node 4, a filter is installed in said node in order to select and send indicated subchannels to the media terminal 3.

The node 4 receives regularly update messages 5 from the media terminal 3 that indicate the selection of subchannels.

Firstly, if the node 4 receives a new update message 5 from the media terminal 3, the filter is installed in such access node.

Then, when the node 4 receives an update message 5 it already received previously, it recognizes the selection of channels linked with the update message 5 thanks to their multicast address. The node 4 uses then the filter installed when the update message 5 appeared for the first time. As the subchannels were previously sent to the media terminal 3 by the node 4, the filter is updated upon receipt of next update messages 5.

In a further embodiment of the process, the invention proposes to filter the subchannels the most upstream in the multicast tree. Indeed, it allows saving even more bandwidth in the network.

To that purpose, the node 4 transmits the update message 5 to an upstream node of the multicast tree. According to the configuration, the node 4 can send an IGMP join to the upstream node, followed by the update message 5.

Upon receipt of the update message 5, the upstream node checks if all indicated subchannels are available and, if yes, the filter is installed in the upstream node.

Then, upstream propagation can be repeated until the filter is installed in the first upstream node receiving all indicated subchannels. In this way, the filtration can be achieved as close as possible from the source.

In addition, as the filtration is not needed anymore in the downstream node, a message can then be sent to the downstream node for removing the filter from such node.

## Claims

1. Process for delivering a channel (1) comprising a plurality of subchannels to a media terminal (3) through a network (2), said channel being sent over a single multicast tree of the network (2), said multicast tree comprising nodes (4), wherein :
- the media terminal (3) sends an update message (5) to a node (4) in order to indicate subchannels it wishes to receive;
- the node (4) selects indicated subchannels and sends only said subchannels to the media terminal (3).

2. Process according to claim 1, **characterized in that** the network (2) uses IGMP protocol.

3. Process according to claim 1 or 2, **characterized in that** the node (4) receives all subchannels of the channel (1).

4. Process according to any of claims 1 to 3, **characterized in that** upon receipt of an updated message (5) by the node (4), a filter is installed in said node to select and send the indicated subchannels.

5. Process according to claim 4, **characterized in that** if the subchannels were previously sent to the media terminal (3) by the node (4), the filter is updated upon receipt of next update message (5).

6. Process according to any of claims 1 to 5, **characterized in that** the node (4) transmits the update message (5) to an upstream node of the multicast tree.

7. Process according to claim 6, **characterized in that** the node (4) sends an IGMP join to the upstream node, followed by the update message (5).

8. Process according to claim 6 or 7, **characterized in that** a message is sent to the downstream node for removing the filter from such node.

9. Node (4) of a multicast tree of a network (2) delivering a channel (1) comprising a plurality of subchannels over such tree, said node comprising means for filtering subchannels indicated in an update message (5).
